# EUROPÄISCHE PATENTSCHRIFT

(11) **EP 2 403 704 B1**
(45) Veröffentlichungstag und Bekanntmachung des Hinweises auf die Patenterteilung: **26.11.2014**
(21) Anmeldenummer: 10706650.8
(22) Anmeldetag: 04.03.2010
(51) Int. Cl.: B29C 65/08, B23K 20/10, B60G 17/015

(54) **VERFAHREN ZUR BEFESTIGUNG EINES BAUTEILS AN EIN KUNSTSTOFFTEIL EINES KRAFTFAHRZEUGS MIT DEM TORSIONALEN ULTRASCHALLSCHWEISSVERFAHREN**
METHOD FOR FASTENING A COMPONENT TO A PLASTIC PART OF A MOTOR VEHICLE USING THE TORSIONAL ULTRASONIC WELDING METHOD
PROCÉDÉ POUR LA FIXATION D'UN COMPOSANT À UNE PIÈCE EN PLASTIQUE D'UN VÉHICULE AUTOMOBILE AVEC UN PROCÉDÉ DE SOUDAGE AUX ULTRASONS PAR TORSION

(30) Priorität: 05.03.2009 DE 102009011273
(43) Veröffentlichungstag der Anmeldung: 11.01.2012
(73) Patentinhaber: Faurecia Exteriors GmbH, 31655 Stadthagen (DE); Telsonic GmbH, 91056 Erlangen (DE)
(72) Erfinder: SAUTNER, Anton, 91757 Treuchtlingen (DE); BÜCKER, Dirk, 41199 Mönchengladbach 3 (DE); GÖRSE, Hergen, 91154 Roth (DE); LANG, Georg, 97855 Tiefenstein (DE); REGENBERG, Claus, 90513 Fürth (DE)
(74) Vertreter: Tischner, Oliver
(86) Internationale Anmeldenummer: PCT/EP2010/052755
(87) Internationale Veröffentlichungsnummer: WO 2010/100225

(56) Entgegenhaltungen:
- EP-A1- 1 410 988
- EP-A2- 0 816 053
- DE-A1- 19 758 075
- US-A1- 2005 104 389

## Beschreibung

Die Erfindung betrifft ein Ultraschallschweißverfahren zur Befestigung eines Bauteils an ein Funktionsteil, wobei das Bauteil in einem Halter befestigt und der Halter mit dem Funktionsteil verbunden wird.

An einem Kraftfahrzeug werden viele Funktionsteile verwendet, wie zum Beispiel ein Stoßfänger oder ein Radkasten. Aufgrund der unterschiedlichsten Ausstattungsvarianten ist es erforderlich, an dem Funktionsteil Bauteile zu befestigen. Ein derartiges Bauteil ist zum Beispiel bei einem Stoßfänger ein Sensor zur Abstandsmessung. Da ein Sensor nicht direkt am Stoßfänger befestigt werden kann, wird er in einen Halter aus Kunststoff eingesetzt, wobei der Halter mit dem Stoßfänger verbunden wird.

Nach dem Stand der Technik werden diese Halter mit dem Funktionsteil durch Kleben, Clipsen oder den herkömmlichen Schweißverfahren befestigt.

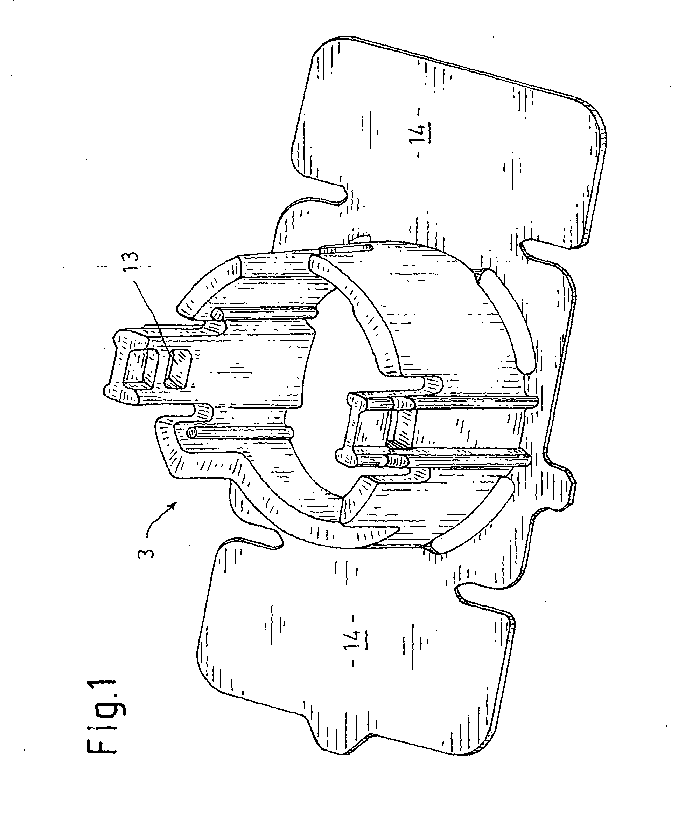

Figur 1 (siehe auch die Figurenbeschreibung weiter unten) zeigt einen Halter nach dem Stand der Technik. In diesen Halter wird ein Sensor eingeclipst. Der Halter wird an einem Stoßfänger eines Kraftfahrzeugs zum Beispiel durch Kleben oder Schweißen befestigt. Hierzu sind am Halter großflächige Klebe- oder Schweißflächen vorgesehen.

Nachteilig hieran ist, dass diese Halter speziell für das Funktionsteil, an dem sie befestigt werden sollen, ausgebildet sein müssen und großflächige Klebe- oder Schweißflächen aufweisen müssen. Die Klebe- oder Schweißflächen müssen in der Regel an das Funktionsteil angepasst werden. Großflächige Klebe- oder Schweißflächen können leicht Oberflächenfehler am Funktionsteil verursachen, zum Beispiel auf der Vorderseite des Stoßfängers.

Der Erfindung liegt die Aufgabe zugrunde, ein Verfahren zur Befestigung eines Bauteils an ein Funktionsteil eines Kraftfahrzeugs so zu verbessern, dass die Halter nicht speziell für das Funktionsteil, an dem sie befestigt werden sollen, ausgebildet sein müssen und keine großflächigen Klebe- oder Schweißflächen am Halter erforderlich sind.

Erfindungsgemäß wird diese Aufgabe durch das Verfahren gemäß Anspruch 1 gelöst.

Das torsionale Ultraschallschweißen ist zum Beispiel beschrieben in der EP 1 930 148 A1 oder in der EP 1410988 A1.

In einer bevorzugten Ausbildung bestehen das Funktionsteil und/oder der Halter aus einem Kunststoff. Das Funktionsteil und/oder der Halter können jedoch auch aus einem Metall bestehen.

Bevorzugt ist das Funktionsteil ein Innen- oder Außenteil eines Kraftfahrzeugs. Außenteile sind z.B. Stoßfänger, Heckklappen, Kotflügel, Türen, Seitenwände, das Dach oder der Unterboden.

Bevorzugt wird der Halter als Hohlzylinder ausgebildet und das Bauteil wird in den Hohlzylinder eingesetzt und befestigt. Der Halter besteht bevorzugt auch aus Kunststoff und kann so durch das torsionale Ultraschallschweißverfahren mit dem Funktionsteil, welches bevorzugt auch ein Kunststoffteil ist, verschweißt werden. Die Verschweißung erfolgt dabei an einer Stirnfläche des Halters.

Die ersten Kopplungselemente am Halter und/oder Hohlzylinder bilden radiale Auskragungen mit Auflageflächen für die Sonotrode. Diese radialen Auskragungen können wesentlich kleiner ausgebildet werden als die Klebe- oder Schweißflächen an einem Halter nach dem Stand der Technik, weil das torsionale Ultraschallschweißverfahren nur kleine Schweißflächen erfordert. Die radialen Auskragungen sollten eine zur Längsachse des Halters senkrechte Auflagefläche für die Sonotrode aufweisen.

In einer Ausführungsform sind die radialen Auskragungen einzelne Zapfen, ein den Halter umgreifender Ring oder Segmente. Je nach den Erfordernissen ist die Geometrie der radialen Auskragungen auszubilden.

In der erfindungsgemäßen Ausführungsform werden als zweite Kopplungselemente sich im Wesentlichen parallel zur Torsionsachse erstreckende Schweißelemente verwendet. Diese Schweißelemente liegen beim Schweißvorgang am Funktionsteil auf und werden durch das torsionale Ultraschallschweißverfahren mit dem Funktionsteil verschweißt.

Als Schweißelemente werden einzelne Zapfen verwendet.

Bevorzugt werden die zweiten Kopplungselemente mit den ersten Kopplungselementen so verbunden, dass sie Schwingungen übertragen können.

In bevorzugter Ausführungsform werden die zweiten Kopplungselemente oder Schweißelemente einstückig mit den ersten Kopplungselementen ausgebildet. Hierdurch werden die den Schweißvorgang erzeugenden Schwindungen am besten übertragen.

In einer erfindungsgemäßen Ausführungsform wird die Sonotrode als Hohlzylinder ausgebildet und umgreift beim Schweißvorgang den Halter und/oder Hohlzylinder und sitzt auf den Auflageflächen am ersten Kopplungselement auf. Hierdurch ergeben sich perfekte Schweißstellen.

Eine erfindungsgemäße Verwendung des torsionalen Ultraschallschweißverfahrens ist die Befestigung eines Sensors an einen Stoßfänger für ein Kraftfahrzeug.

Der Sensor ragt in einer Ausführungsvariante teilweise aus dem Halter heraus und ragt in eine durchgehende Bohrung und/oder Stanzung im Stoßfänger.

Zwischen dem Sensor und dem Stoßfänger ist in einer Variante ein Entkopplungsring angeordnet. Dieser Entkopplungsring kann zum Beispiel an den Halter angespritzt sein.

Ein erfindungsgemäßer Halter zur Verwendung für das Ultraschallschweißverfahren ist dadurch gekennzeichnet, dass der Halter ein Hohlzylinder ist, der Halter radiale Auskragungen als Auflagefläche für die Sonotrode aufweist und an den radialen Auskragungen sich im Wesentlichen parallel zur Torsionsachse erstreckende Schweißelemente angeordnet sind. Dieser Halter kann universell für verschiedene Funktionsteile verwendet werden und muss nur an das aufzunehmende Bauteil angepasst werden. Die Schweißelemente sind bevorzugt einzelne Zapfen zur Anlage an das Funktionsteil.

Nachfolgend wird die Erfindung an Hand von Figuren näher erläutert.

Figur 1 zeigt einen Halter 3 nach dem Stand der Technik. In diesen Halter 3 lässt sich zum Beispiel ein Sensor als Bauteil über Rastelemente 13 einclipsen. Der Halter 3 ist aus Kunststoff bevorzugt als Spritzteil gefertigt und weist großflächige Klebe- oder Schweißflächen 14 auf, mit denen er an ein Funktionsteil angeklebt werden kann. An jedes Funktionsteil muss der Halter 3 bzw. seine Klebe- oder Schweißflächen 14 angepasst werden. Dies bedingt für jedes Funktionsteil einen speziellen Halter 3, auch wenn immer der gleiche Sensor verbaut wird.

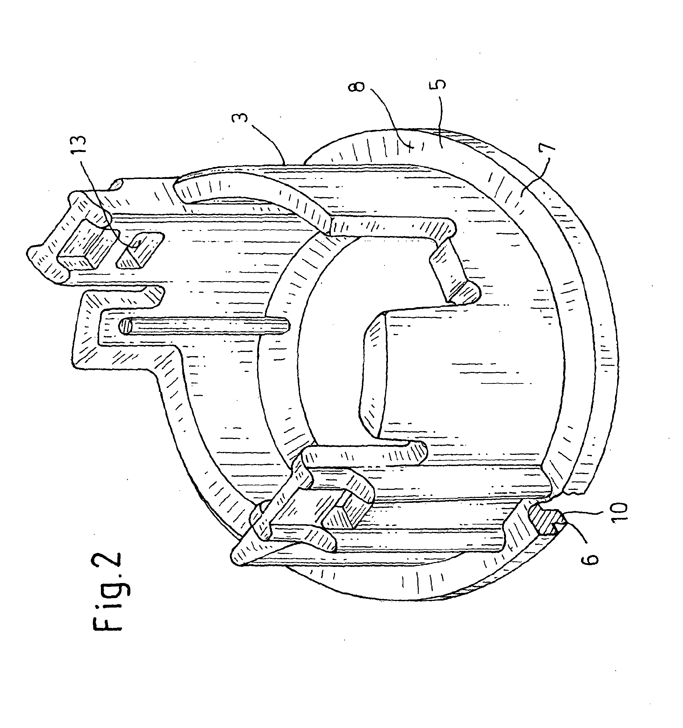

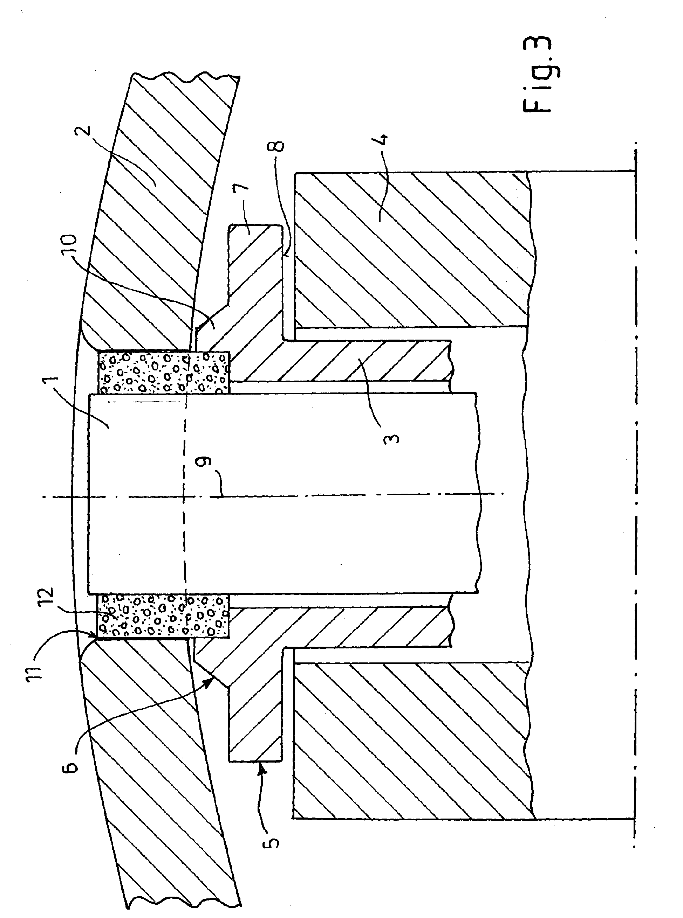

Figur 2 zeigt einen erfindungsgemäßen Halter 3, der gegenüber dem Halter nach dem Stand der Technik gemäß Figur 1, an seiner im Einbau zum Funktionsteil weisenden Stirnseite verändert ist. Der erfindungsgemäße Halter 3 ist als Hohlzylinder ausgebildet mit Rastelementen 13, in die ein Bauteil 1 (siehe Figur 3) eingeclipst wird. An der im Einbau zum Funktionsteil weisenden Stirnseite weist der Halter 3 erste Kopplungselemente 5 auf, die zur Ankopplung der Schwingungen der Sonotrode an den Halter 3 dienen und die aus radialen Auskragungen bestehen. In der hier gezeigten Ausführungsform sind diese ersten Kopplungselemente 5 ein den Halter 3 umgreifender, radialer Ring, der eine Auflagefläche 8 für eine Sonotrode aufweist.

An diesem Ring sind zweite Kopplungselemente 6 zur Ankopplung der von der Sonotrode induzierten Schwingungen im ersten Kopplungselement 5 an das Funktionsteil 2 angeordnet. Diese zweiten Kopplungselemente 6 sind im Wesentlichen parallel zur Torsionsachse 9 sich erstreckende Schweißelemente 10 (siehe Figur 3). Diese Schweißelemente 10 sind dabei in der hier gezeigten Ausführungsform einzelne Zapfen, welche die Schwingungen der Sonotrode auf das Funktionsteil übertragen. Die Enden der Zapfen werden beim Schweißvorgang mit dem Funktionsteil verschmolzen. Das Funktionsteil 2 ist in den hier gezeigten Figuren ein Kunststoffteil.

Figur 3 zeigt einen Schnitt durch einen erfindungsgemäßen Halter 3 mit aufgesetzter Sonotrode 4, wobei der Halter auf ein Funktionsteil 2 an der Stelle aufgesetzt ist, an der der Halter 3 mit dem Funktionsteil 2 verschweißt werden soll. Im Halter 3 ist ein Bauteil 1 eingesetzt und über die in der Figur 2 gezeigten Rastelemente verrastet bzw. verclipst (hier nicht gezeigt).

Die Sonotrode 4 für das torsionale Ultraschallschweißverfahren ist als Hohlzylinder ausgebildet und umgreift in der hier gezeigten Ausführungsform den Halter 3 und sitzt beim Schweißvorgang auf einer Auflagefläche 8 an ersten Kopplungselementen 5 auf. Diese ersten Kopplungselemente 5 sind radiale Auskragungen 7, die in der hier gezeigten Ausführungsform ein auf der Außenfläche des Halters 3 umlaufender Ring sind. Die ersten Kopplungselemente 5 befinden sich an dem zum Funktionsteil 2 gewandten Ende des Halters 3.

An der zum Funktionsteil 2 gewandten Seite der ersten Kopplungselemente 5 bzw. der radialen Auskragungen 7 sind als zweite Kopplungselemente 6 Schweißelemente 10 angeordnet. Diese Schweißelemente 10 erstrecken sich in der hier gezeigten Ausführungsform im Wesentlichen parallel zur Torsionsachse 9 und liegen beim Schweißvorgang auf dem Funktionsteil 2 auf. Die Schweißelemente 10 sind hier als einzelne Zapfen ausgebildet.

Das in dem Halter 3 verrastete Bauteil 1 ist hier ein Sensor zur Messung eines Abstandes und das Funktionsteil 2 ist ein Stoßfänger eines Kraftfahrzeuges.

Im Funktionsteil 2 ist eine Bohrung 11 eingebracht, in die das Bauteil 1 hineinragt. Zwischen dem Funktionsteil 2 und dem Bauteil 1 ist ein Entkopplungsring 12 angeordnet, der zum Beispiel mit dem Halter 3 verbunden sein kann.

Die Erfindung beschreibt eine Anwendung des torsionalen Ultraschallschweißens, welches auf Kunststoffbelange und dessen Einsatzgebiet verändert wurde, sowie die Konzeption der Halter 3, welche in Kombination mit dem abgeänderten Schweißverfahren eine abzeichnungsfreie, kleinere und sichere Verbindung ermöglicht. Diese Art der Verbindung erlaubt auch das Anformen von harten und weichen Materialien sowie andere Materialalternativen mit differenzierter Teilauslegung.

Wie weiter oben schon erwähnt, ist das torsionale Ultraschallschweißverfahren in der EP 1 930 148 A1 beschrieben. Unter torsional wird eine Schwingung einer Sonotrode 4 um ihre Längsachse oder Torsionsachse 9 verstanden, das heißt die Sonotrode 4 führt eine torsionale Bewegung um eine Torsionsachse aus, welche im Wesentlichen senkrecht auf der Ebene der zu bildenden Schweißnaht steht. Die Torsionsachse 9 liegt somit im Wesentlichen parallel zur Kraftachse, mit welcher die Sonotrode 4 auf das Funktionsteil 2 gedrückt wird.

## Patentansprüche

1. Ultraschallschweißverfahren zur Befestigung eines Bauteils (1) an ein Funktionsteil (2), wobei das Bauteil (1) in einem Halter (3) befestigt und der Halter (3) mit dem Funktionsteil (2) verbunden wird, wobei als Verfahren das an sich bekannte torsionale Ultraschallschweißverfahren verwendet wird, mit einer Sonotrode (4) zur Übertragung der den Schweißvorgang erzeugenden Schwingungen auf den zu verschweißenden Halter (3), wobei der Halter (3) mit ersten Kopplungselementen (5) zur Ankopplung der Schwingungen der Sonotrode (4) an den Halter (3) und mit zweiten Kopplungselementen (6) zur Ankopplung der von der Sonotrode (4) induzierten Schwingungen im ersten Kopplungselement (5) an das Funktionsteil (2) versehen wird und dadurch beim Schweißvorgang die Schwingungen der Sonotrode (4) auf die Kopplungselemente (5, 6) und über die Kopplungselemente (5,6) auf das Funktionsteil (2) übertragen werden und so den Halter (3) mit dem Funktionsteil (2) verschweißen, **dadurch gekennzeichnet, dass** als zweite Kopplungselemente (6) sich im Wesentlichen parallel zur Torsionsachse (9) erstreckende Schweißelemente (10), nämlich einzelne Zapfen verwendet werden.

2. Ultraschallschweißverfahren nach Anspruch 1, **dadurch gekennzeichnet, dass** das Funktionsteil (2) und/oder der Halter (3) aus einem Kunststoff bestehen.

3. Ultraschallschweißverfahren nach Anspruch 1, **dadurch gekennzeichnet, dass** das Funktionsteil (2) und/oder der Halter (3) aus einem Metall bestehen.

4. Ultraschallschweißverfahren nach einem der Ansprüche 1 bis 3, **dadurch gekennzeichnet, dass** das Funktionsteil (2) ein Innen- oder Außenteil eines Kraftfahrzeugs ist.

5. Ultraschallschweißverfahren nach Anspruch 4, **dadurch gekennzeichnet, dass** das Außenteil Stoßfänger, Heckklappen, Kotflügel, Türen, Seitenwände, Dach oder der Unterboden sind.

6. Ultraschallschweißverfahren nach einem der Ansprüche 1 bis 5, **dadurch gekennzeichnet, dass** der Halter (3) als Hohlzylinder ausgebildet wird und das Bauteil (1) in den Hohlzylinder eingesetzt und befestigt wird.

7. Ultraschallschweißverfahren nach einem der Ansprüche 1 bis 6, **dadurch gekennzeichnet, dass** die ersten Kopplungselemente (5) am Halter (3) und/oder Hohlzylinder radiale Auskragungen (7) bilden mit Auflageflächen (8) für die Sonotrode (4).

8. Ultraschallschweißverfahren nach Anspruch 7, **dadurch gekennzeichnet, dass** die radialen Auskragungen (7) einzelne Zapfen, ein den Halter (3) umgreifender Ring oder Segmente sind.

9. Ultraschallschweißverfahren nach einem der Ansprüche 1 bis 8, **dadurch gekennzeichnet, dass** die zweiten Kopplungselemente (6) mit den ersten Kopplungselementen (5) so verbunden werden, dass sie Schwingungen übertragen können.

10. Ultraschallschweißverfahren nach einem der Ansprüche 1 bis 9, **dadurch gekennzeichnet, dass** die zweiten Kopplungselemente (6) oder Schweißelemente (10) einstückig mit den ersten Kopplungselementen (5) ausgebildet werden.

11. Ultraschallschweißverfahren nach einem der Ansprüche 1 bis 10, **dadurch gekennzeichnet, dass** die Sonotrode (4) als Hohlzylinder ausgebildet wird und beim Schweißvorgang den Halter (3) und/oder Hohlzylinder umgreift und auf den Auflageflächen (8) am ersten Kopplungselement (5) aufsitzt.

12. Verwendung des torsionalen Ultraschallschweißverfahrens nach einem der Ansprüche 1 bis 11 zur Befestigung eines Sensors an einen Stoßfänger für ein Kraftfahrzeug.

13. Verwendung nach Anspruch 12, **dadurch gekennzeichnet, dass** der Sensor teilweise aus dem Halter (3) herausragt und in eine durchgehende Bohrung (11) und/oder Stanzung im Stoßfänger ragt.

14. Verwendung nach Anspruch 13, **dadurch gekennzeichnet, dass** zwischen dem Sensor und dem Stoßfänger ein Entkopplungsring (12) angeordnet ist.

15. Halter (3) zur Verwendung für ein Ultraschallschweißverfahren nach einem der Ansprüche 1 bis 11, wobei der Halter (3) ein Hohlzylinder ist, der Halter (3) radiale Auskragungen (7) als Auflagefläche (8) für die Sonotrode aufweist, **dadurch gekennzeichnet, dass** an den radialen Auskragungen (7) sich im Wesentlichen parallel zur Torsionsachse (9) erstreckende Schweißelemente (10) angeordnet sind, und dass die Schweißelemente (10) einzelne Zapfen sind zur Anlage an das Funktionsteil (2).

## Claims

1. An ultrasonic welding method for fastening a component (1) to a functional part (2), wherein the component (1) is fastened in a holder (3) and the holder (3) is connected to the functional part (2), wherein the torsional ultrasonic welding method known per se is used as the method, with a sonotrode (4) for transferring the vibrations generating the welding process to the holder (3) to be welded, wherein the holder (3) is provided with first coupling elements (5) for coupling the vibrations of the sonotrode (4) to the holder (3) and with second coupling elements (6) for coupling of the vibrations induced by the sonotrode (4) in the first coupling element (5) to the functional part (2) and thereby, in the welding process, the vibrations of the sonotrode (4) are transferred to the coupling elements (5, 6) and via the coupling elements (5, 6) to the functional part (2) and thus weld the holder (3) to the functional part (2), **characterized in that** welding elements (10), namely individual pins, extending essentially parallel to the torsional axis (9) are used as second coupling elements (6).

2. An ultrasonic welding method according to claim 1, **characterized in that** the functional part (2) and/or the holder (3) consists of a plastic.

3. An ultrasonic welding method according to claim 1, **characterized in that** the functional part (2) and/or the holder (3) consists of a metal.

4. An ultrasonic welding method according one of claims 1 to 3, **characterized in that** the functional part (2) is an inner- or outer part of a motor vehicle.

5. An ultrasonic welding method according to claim 4, **characterized in that** the outer part is a bumper, trunk lid, fender, door, side wall, roof or the undercarriage.

6. An ultrasonic welding method according one of claims 1 to 5, **characterized in that** the holder (3) is designed as a hollow cylinder and the component (1) is inserted in the hollow cylinder and fastened.

7. An ultrasonic welding method according one of claims 1 to 6, **characterized in that** the first coupling elements (5) on the holder (3) and/or hollow cylinder form radial projections (7) with supporting surfaces (8) for the sonotrode (4).

8. An ultrasonic welding method according to claim 7, **characterized in that** the radial projections (7) are individual pins, a ring encompassing the holder (3) or segments.

9. An ultrasonic welding method according one of claims 1 to 8, **characterized in that** the second coupling elements (6) are connected with the first coupling elements (5) such that they can transfer vibrations.

10. An ultrasonic welding method according one of claims 1 to 9, **characterized in that** the second coupling elements (6) or weld elements (10) are integrally designed with the first coupling elements (5).

11. An ultrasonic welding method according one of claims 1 to 10, **characterized in that** the sonotrode (4) is designed as a hollow cylinder and in the welding process encompasses the holder (3) and/or hollow cylinder and rests on the supporting surfaces (8) of the first coupling element (5).

12. Use of the torsional ultrasonic welding method according to one of claims 1 to 11 for fastening a sensor on a bumper for a motor vehicle.

13. Use according to claim 12, **characterized in that** the sensor in part projects from the holder (3) and projects into a continuous bored hole (11) and/or press cut in the bumper.

14. Use according to claim 13, **characterized in that** a decoupling ring (12) is arranged between the sensor and the bumper.

15. A holder (3) for use for an ultrasonic welding method according to one of claims 1 to 11, wherein the holder (3) is a hollow cylinder, which holder (3) has radial projections (7) as a supporting surface (8) for the sonotrode, **characterized in that** welding elements (10) extending essentially parallel to the torsional axis (9) are arranged on the radial projections (7), and that the welding elements (10) are individual pins for the attachment to the functional part (2)

## Revendications

1. Procédé de soudage aux ultrasons permettant de fixer une pièce (1) à un élément fonctionnel (2), ladite pièce (1) étant fixée dans un support (3) et ledit support (3) étant assemblé à l'élément fonctionnel (2), le procédé utilisé étant le procédé de soudage aux ultrasons par torsion connu en soi, avec une sonotrode (4) destinée à transmettre sur le support (3) à souder les vibrations qui génèrent le processus de soudage, ledit support (3) étant muni de premiers éléments de couplage (5) pour relier au support (3) les vibrations de la sonotrode (4) et de deuxièmes éléments de couplage (6) pour relier à l'élément fonctionnel (2) les vibrations induites par la sonotrode (4) dans le premier élément de couplage (5), et, de ce fait, les vibrations de la sonotrode (4) sont transmises pendant le processus de soudage sur les éléments de couplage (5, 6) et sur l'élément fonctionnel (2) par l'intermédiaire des éléments de couplage (5, 6) et soudent ainsi le support (3) à l'élément fonctionnel (2), **caractérisé en ce que** les deuxièmes éléments de couplage (6) utilisés sont des éléments de soudage (10), à savoir des picots individuels, qui s'étendent sensiblement parallèlement à l'axe de torsion (9).

2. Procédé de soudage par ultrasons selon la revendication 1, **caractérisé en ce que** l'élément fonctionnel (2) et/ou le support (3) sont réalisés en matière plastique.

3. Procédé de soudage par ultrasons selon la revendication 1, **caractérisé en ce que** l'élément fonctionnel (2) et/ou le support (3) sont réalisés en métal.

4. Procédé de soudage par ultrasons selon l'une quelconque des revendications 1 à 3, **caractérisé en ce que** l'élément fonctionnel (2) est une pièce intérieure ou une pièce extérieure d'un véhicule automobile.

5. Procédé de soudage par ultrasons selon la revendication 4, **caractérisé en ce que** la pièce extérieure est un pare-chocs, un hayon arrière, une aile, une porte, une paroi latérale, un toit ou un dessous de caisse.

6. Procédé de soudage par ultrasons selon l'une quelconque des revendications 1 à 5, **caractérisé en ce que** le support (3) est réalisé sous la forme d'un cylindre creux, et la pièce (1) est insérée et fixée dans le cylindre creux.

7. Procédé de soudage par ultrasons selon l'une quelconque des revendications 1 à 6, **caractérisé en ce que** les premiers éléments de couplage (5) sur le support (3) et/ou cylindre creux forment des saillies radiales (7) avec des surfaces de pose (8) pour la sonotrode (4).

8. Procédé de soudage par ultrasons selon la revendication 7, **caractérisé en ce que** les saillies radiales (7) sont des picots individuels, un anneau enserrant le support (3) ou des segments.

9. Procédé de soudage par ultrasons selon l'une quelconque des revendications 1 à 8, **caractérisé en ce que** les deuxièmes éléments de couplage (6) sont reliés aux premiers éléments de couplage (5) de telle sorte qu'ils peuvent transmettre des vibrations.

10. Procédé de soudage par ultrasons selon l'une quelconque des revendications 1 à 9, **caractérisé en ce que** les deuxièmes éléments de couplage (6) ou éléments de soudage (10) sont réalisés d'un seul tenant avec les premiers éléments de couplage (5).

11. Procédé de soudage par ultrasons selon l'une quelconque des revendications 1 à 10, **caractérisé en ce que** la sonotrode (4) est réalisée sous forme de cylindre creux et, pendant le processus de soudage, enserre le support (3) et/ou cylindre creux et est posée sur les surfaces de pose (8) du premier élément de couplage (5).

12. Utilisation du procédé de soudage aux ultrasons par torsion selon l'une quelconque des revendications 1 à 11, pour fixer un capteur sur un pare-chocs pour un véhicule automobile.

13. Utilisation selon la revendication 12, **caractérisée en ce que** le capteur s'avance en partie hors du support (3) et s'engage dans une forure (11) débouchante et/ou découpe dans le pare-chocs.

14. Utilisation selon la revendication 13, **caractérisée en ce qu'**un anneau de découplage (12) est disposé entre le capteur et le pare-chocs.

15. Support (3) destiné à être utilisé pour un procédé de soudage aux ultrasons par torsion selon l'une quelconque des revendications 1 à 11, ledit support (3) étant un cylindre creux, le support (3) comportant des saillies radiales (7) formant une surface de pose (8) pour la sonotrode, **caractérisé en ce que** des éléments de soudage (10), s'étendant sensiblement parallèlement à l'axe de torsion (9), sont disposés sur les saillies radiales (7), et **en ce que** lesdits éléments de soudage (10) sont des picots individuels destinés à venir en appui contre l'élément fonctionnel (2).
